Europäisches Patentamt

European Patent Office

Office européen des brevets

(19)

(11) Numéro de publication: **0 097 587**
**B1**

(12) **FASCICULE DE BREVET EUROPEEN**

(45) Date de publication du fascicule du brevet
**11.09.85**

(21) Numéro de dépôt: **83401246.0**

(22) Date de dépôt: **16.06.83**

(51) Int. Cl.⁴ **F 28 F 9/22,** F 28 F 9/16,
B 23 P 15/26

(54) **Echangeur multitubulaire.**

(30) Priorité: **17.06.82 FR 8210590**

(43) Date de publication de la demande:
**04.01.84 Bulletin 84/1**

(45) Mention de la délivrance du brevet:
**11.09.85 Bulletin 85/37**

(84) Etats contractants désignés:
**BE DE GB IT**

(56) Documents cités:
**DE - C - 583 057**
**FR - A - 2 031 668**
**FR - A - 2 045 194**
**FR - A - 2 381 267**
**US - A - 1 770 208**
**US - A - 3 439 738**
**US - A - 3 708 012**

㉓ Titulaire· **SOCIETE ANONYME DES USINES
CHAUSSON, 35 rue Malakoff, F-92600 Asnieres (FR)**

(72) Inventeur: **Paquet, André, 226 rue J.B. Charcot,
F-92400 Courbevoie (FR)**

(74) Mandataire: **Coester, Jacques Charles, Cabinet
Madeuf 3, avenue Bugeaud, F-75116 Paris (FR)**

BUNDESDRUCKEREI BERLIN

# Description

Il est bien connu dans la technique des échangeurs multitubulaires de munir le faisceau de tubes d'une ou plusieurs cloisons intermédiaires faisant office de chicanes directrices ou servant simplement à supporter les tubes dont les extrémités sont engagées dans des collecteurs eux-mêmes disposés à l'intérieur d'une enveloppe.

Dans la technique, les tubes sont reliés aux collecteurs et aux plaques intermédiaires ou cloisons par expansion, par soudage, par brasage ou encore ils sont assemblés au moyen de joints déformables.

L'invention concerne plus particulièrement ceux des échangeurs dont le faisceau tubulaire est brasé et elle concerne plus particulièrement encore ceux des tubes qui comportent des moulures près de leurs extrémités, moulures qui constituent des butées pour des collecteurs qui occupent ainsi un emplacement bien précis et dont le brasage est facilité par lesdites moulures, comme connu par le FR-A-2 031 668.

L'invention résout le problème de mettre en place les plaques intermédiaires formant supports et éventuellement chicanes malgré la présence des moulures près de l'extrémité des tubes et tout en permettant de braser lesdites plaques intermédiaires aux tubes.

Conformément à l'invention, un échangeur multitubulaire dont les tubes sont engagés dans des collecteurs ainsi que dans des plaques intermédiaires formant éventuellement chicanes, les tubes présentant près de leurs extrémités des moulures limitant l'enfoncement des collecteurs avant leur brasage, est caractérisé en ce que les plaques intermédiaires présentent des trous dont le diamètre correspond à celui des moulures des tubes, lesdites plaques étant inclinées par rapport à l'axe des tubes pour prendre appui au moins ponctuellement contre la paroi externe de chaque tube. Dans un mode préférentiel de réalisation, les plaques sont conformées en zigzag, les trous étant ménagés dans les plis successifs.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est une coupe-élévation schématique d'un échangeur multitubulaire faisant application de l'invention.

La fig. 2 est une coupe-élévation partielle illustrant un mode de réalisation préféré de l'échangeur.

La fig. 3 est une coupe très agrandie d'un détail de réalisation apparaissant à la fig. 2.

La fig. 4 est une coupe-élévation explicative illustrant une phase d'assemblage de l'échangeur.

L'échangeur illustré au dessin est du type dit multitubulaire qui est renfermé dans une enveloppe 1 fermée par des couvercles 2, 3. L'échangeur proprement dit comporte des tubes 4 dont les extrémités sont engagées dans des collecteurs 5, 6. L'un des fluides, par exemple le fluide à refroidir, circule suivant la flèche $f_1$ et l'autre fluide suivant la flèche $f_2$.

Dans la réalisation objet de l'invention, les tubes et les collecteurs sont métalliques et sont assemblés par brasage. Il peut s'agir d'une brasure tendre si les tubes sont en métaux lourds, par exemple en cuivre ou alliage de cuivre, ou d'une brasure forte si les tubes et les collecteurs sont en alliage léger.

Afin que les collecteurs soient correctement disposés par rapport aux tubes, ceux-ci sont munis de moulures 7 formées près des extrémités par gonflage, repoussage ou un autre moyen ou encore lesdites moulures peuvent être rapportées et, dans ce cas, être constituées par des bagues enfilées sur les extrémités des tubes.

Le faisceau de tubes 4 doit être muni entre les collecteurs de plaques de liaison 8 pouvant former des chicanes comme c'est le cas dans le mode de réalisation représenté, les plaques étant de toute façon destinées à assurer une liaison entre les tubes pour empêcher qu'ils vibrent et qu'ils soient détériorés.

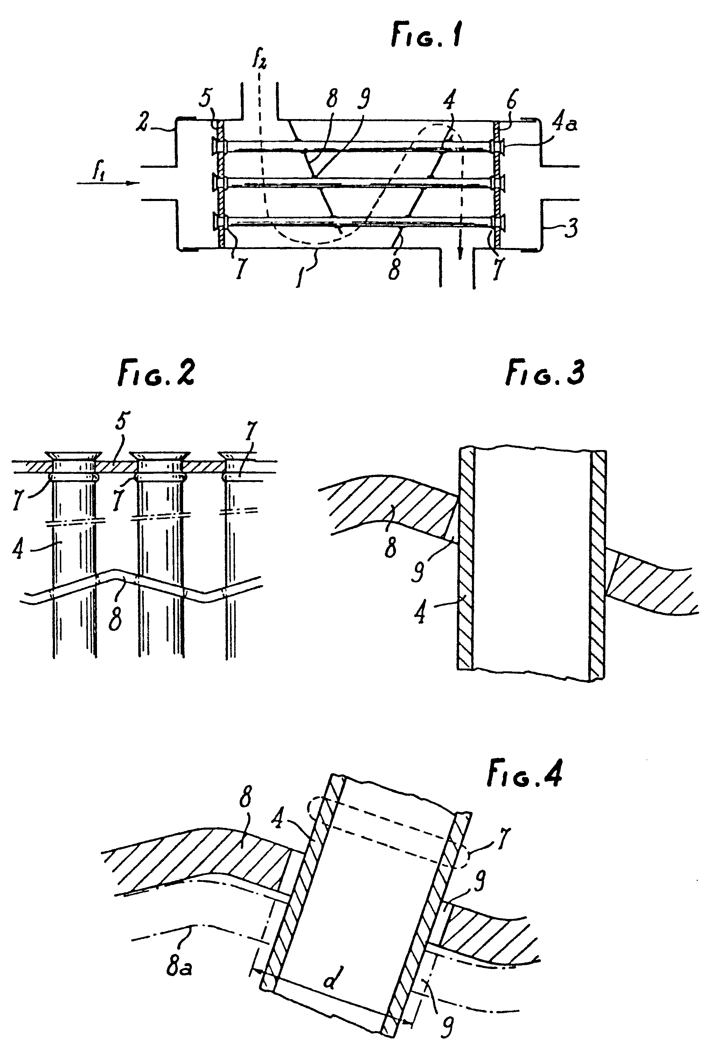

Etant donné la présence des moulures 7 aux deux extrémités on pratique dans les plaques 8 des trous présentant un diamètre au moins égal à celui des moulures et on dispose, dans la réalisation de la fig. 1, les plaques 8 pour qu'elles soient inclinées et que, par suite, les tubes appuient contre le bord des trous pour être ultérieurement brasés aux plaques.

Dans le mode de réalisation préféré des fig. 2 à 4, on conforme les plaques 8 en zigzag comme cela est représenté et on découpe dans les plis de celles-ci des trous 9 dont la diamètre d (fig. 4) est égal au diamètre des moulures 7 et est donc supérieur au diamètre des tubes.

L'inclinaison des plis successifs délimitant le zigzag est choisie compte tenu des diamètres respectifs des trous 9 et des tubes de façon que le bord des plaques 8 délimitant chaque trou 9 soit en contact avec la paroi externe de chaque tube 4 lorsque celles-ci sont amenées dans une position pour laquelle leur plan moyen s'étend perpendiculairement à l'axe des tubes.

Pour assembler le faisceau de tubes 4, on procède comme suit:

Lorsque plusieurs plaques 8, 8a ... 8n sont à utiliser (fig. 4), on les accole les unes aux autres et on introduit les tubes 4 perpendiculairement aux plis dans lesquels les trous 9 sont percés. Les tubes sont ensuite amenés parallèlement les uns aux autres et les plaques collectrices 5, 6 mises en place en les enfilant jusqu'à ce qu'elles viennent en contact avec les moulures 7. L'extrémité 4a des tubes est ensuite évasée et éventuellement gonflée dans les trous des collecteurs. Les plaques 8 formant éventuellement chicanes peuvent encore être déplacées pour être amenées à la position exacte qu'elles doivent occuper. On procède ensuite au brasage du faisceau tubulaire ainsi constitué. Au cours de cette opération, la brasure préalablement disposée soit sur les tubes, soit sur les plaques, fond et les relie mutuellement au voisinage du point de contact. Finalement, le faisceau est mis en place dans l'enveloppe 1 qui est fermée par les couvercles 2, 3.

## Revendications

1. Echangeur multitubulaire dont les tubes (4) sont engagés dans des collecteurs (5, 6) ainsi que dans des plaques intermédiaires (8) formant éventuellement chicanes, les tubes présentant près de leurs extrémités des moulures (7) limitant l'enfoncement des collecteurs avant leur brasage, caractérisé en ce que les plaques intermédiaires présentent des trous (9) dont le diamètre correspond à celui des moulures des tubes, lesdites plaques étant inclinées par rapport à l'axe des tubes pour prendre appui au moins ponctuellement contre la paroi externe de chaque tube.

2. Echangeur suivant la revendication 1, caractérisé en ce que les plaques sont conformées en zigzag, les trous étant ménagés dans les plis successifs.

3. Echangeur suivant l'une des revendications 1 et 2, caractérisé en ce que les plaques sont reliées aux tubes par brasage aux points d'appui mutuels.

4. Echangeur suivant l'une des revendications 1 à 3, caractérisé en ce que les plaques intermédiaires (8) sont enfilées sur les tubes avant l'engagement de ceux-ci dans les collecteurs.

5. Echangeur suivant l'une des revendications 1 à 4, caractérisé en ce que lorsque plusieurs plaques intermédiaires (8, 8a) sont prévues, celles-ci sont tout d'abord accolées pour que leurs trous coïncident et les tubes sont engagés suivant l'axe des trous, les plaques écartées les unes des autres et les tubes ramenés dans une position pour laquelle ils sont parallèles pour être engagés dans les trous des plaques collectrices en même temps qu'ils prennent appui contre le bord des trous des plaques intermédiaires.

6. Echangeur suivant l'une des revendications 1 à 5, caractérisé en ce que les extrémités des tubes sont évasées et éventuellement gonflées après mise en place des collecteurs en même temps que ces derniers sont appliqués contre les moulures avant l'exécution du brasage de l'ensemble tubes-plaques intermédiaires-collecteurs.

## Patentansprüche

1. Röhrenwärmetauscher, bei welchem die Rohre (4) eines Bündels in Sammelbehälter (5, 6) sowie in Zwischenplatten (8) eingesetzt sind, welche gegebenenfalls Leitplatten bilden, wobei die Rohre nahe ihren Enden Kranzleisten (7) als Begrenzung für die Einsetztiefe der Sammelbehälter vor dem Lötgang aufweisen, dadurch gekennzeichnet, daß die Zwischenplatten Öffnungen (9) aufweisen, deren Durchmesser dem Durchmesser der Kranzleisten auf den Rohren entspricht, wobei die Platten gegenüber der Achse der Rohre so geneigt sind, daß sie zumindest punktweise gegen die Außenwandung jedes Rohres anliegen.

2. Wärmetauscher nach Anspruch 1, dadurch gekennzeichnet, daß die Platten zickzackförmig ausgebildet sind, während die Öffnungen in den aufeinanderfolgenden Falzen ausgebildet sind.

3. Wärmetauscher nach einem der Ansprüche 1 oder 2, dadurch gekennzeichnet, daß die Ablenkplatten an den Punkten, an denen sie die Rohre berühren, mit diesen verlötet werden.

4. Wärmetauscher nach einem der Ansprüche 1 bis 3, dadurch gekennzeichnet, daß die Zwischenplatten (8) auf die Rohre aufgesetzt werden, ehe diese in die Sammelbehälter eingesetzt werden.

5. Wärmetauscher nach einem der Ansprüche 1 bis 4, dadurch gekennzeichnet, daß in dem Fall, daß mehrere Zwischenplatten (8, 8a) vorgesehen sind, diese zunächst mit Klammern so befestigt werden, daß ihre Öffnungen miteinander fluchten und daß die Rohre entlang der durch die Öffnungen gehenden Achse eingesetzt werden, wobei die Platten im Abstand voneinander angeordnet sind und die Rohre in eine Stellung gebracht werden, in welcher sie zum Einsetzen in die Öffnungen in den Semmelplatten parallel angeordnet sind und gleichzeitig gegen den Rand der Öffnungen in den Zwischenplatten anliegen.

6. Wärmetauscher nach einem der Ansprüche 1 bis 5, dadurch gekennzeichnet, daß die Enden der Rohre nach dem Einsetzen der Sammelbehälter aufgeweitet und gegebenenfalls verdickt werden, während sie gleichzeitig gegen die Kranzleisten anliegen, ehe der gesamte Verbund aus Rohren, Zwischenplatten und Sammelbehältern verlötet wird.

## Claims

1. Tubular heat exchanger the tubes (4) of which are engaged into tube plates (5, 6) as well as in intermediary plates (8) possibly forming baffle, the tubes having, near their ends, mouldings (7) limiting the driving of the tube plates before their brazing, characterized in that the intermediary plates have holes (9) the diameter of which corresponds to that of the tube mouldings, said plates being inclined with respect to axis of the tubes to bear at least punctually against the outer wall of each tube.

2. Heat exchanger according to claim 1, characterized in that the plates are zig-zag shaped, the holes being provided in successive folds.

3. Heat exchanger according to one of claims 1 and 2, characterized in that the plates are connected to the tubes through brazing to the mutual bearing points.

4. Heat exchanger according to one of claims 1 to 3, characterized in that the intermediary plates (8) are threaded on the tubes before engaging the same in the tube plates.

5. Heat exchanger according to one of claims 1 to 4, characterized in that, when a plurality of intermediary plates (8, 8a) are provided, the same are first joined side by side in order that their holes will coincide and the tubes are engaged axially of the holes, the plates are spaced apart and the tubes are brought back in a position for which they are parallel to be engaged in the holes of the tube plates in the same time as they bear against the edge of the holes of the intermediary plates.

6. Heat exchanger according to one of claims 1 to 5, characterized in that the ends of the tubes are widened and possibly inflated after positioning the tube plates in the same time as the later are applied against the mouldings before brazing of the unit formed by the tubes, the intermediary plates and the end plates.

# Fig. 1

# Fig. 2

# Fig. 3

# Fig. 4